**Europäisches Patentamt**

**European Patent Office**

**Office européen des brevets**

(11) Numéro de publication : **0 473 485 A1**

# DEMANDE DE BREVET EUROPEEN

(21) Numéro de dépôt : **91402199.3**

(51) Int. Cl.⁵ : **G01S 7/52,** H02M 7/529

(22) Date de dépôt : **06.08.91**

(30) Priorité : **24.08.90 FR 9010630**

(43) Date de publication de la demande :
**04.03.92 Bulletin 92/10**

(84) Etats contractants désignés :
**DE GB**

(71) Demandeur : **THOMSON-CSF**
**51, Esplanade du Général de Gaulle**
**F-92800 Puteaux (FR)**

(72) Inventeur : **Manago, Michel**
**THOMSON-CSF, SCPI, Cédex 67**
**F-92045 Paris la Défense (FR)**
Inventeur : **Fontana, Frédéric**
**THOMSON-CSF, SCPI, Cédex 67**
**F-92045 Paris la Défense (FR)**

(74) Mandataire : **Desperrier, Jean-Louis et al**
**THOMSON-CSF SCPI**
**F-92045 PARIS LA DEFENSE CEDEX 67 (FR)**

(54) **Installation de génération et d'émission d'une onde de puissance modulée en amplitude.**

(57)     Installation de génération, par convertisseur DC/AC à découpage vertical, d'une onde de puissance modulée et régulée en amplitude.

Une régulation d'enveloppe est effectuée grâce à une détection-crête (8, 9, 10) suivie d'une acquisition numérique (11). Cette valeur mesurée est comparée, dans un organe logique (7), à une valeur de référence (6), pour fournir l'adressage corrigé (5) de la mémoire (4) qui contient les Q séquences de découpage optimisées.

EP 0 473 485 A1

*FIG. 1*

La présente invention se rapporte à une installation de génération et d'émission d'une onde de puissance modulée et régulée en amplitude, cette installation comportant un convertisseur DC/AC à découpage vertical.

De telles installations trouvent en particulier leur utilisation dans le domaine "Acoustique sous-marine" de type SONAR où l'élément actif de puissance, dit émetteur, génère des signaux électriques sinusoïdaux qui suivent des lois de variation spécifiques, en particulier en amplitude, et qui sont convertis en ondes acoustiques par des traducteurs qui constituent l'antenne acoustique proprement dite.

Délaissant les dispositifs à amplificateurs linéaires dont le rendement est trop peu élevé pour les applications SONAR, ces installations utilisent généralement des convertisseurs DC/AC "à découpage" qui, avec leur structure en demi-pont (deux interrupteurs statiques montés en série) ou en pont complet (deux demi-ponts en parallèle), peuvent atteindre des rendements très élevés.

La technique la plus largement utilisée aujourd'hui est, du fait que l'on dispose de composants de puissance commandables rapides et performants (aptes à commuter de fortes puissances à hautes fréquences), la technique du "découpage vertical", ou autrement dit de Modulation de Largeur d'Impulsions (M.L.I.).

A cette technique de découpage vertical, la modulation d'amplitude souhaitée est le plus souvent obtenue en agissant sur la source d'alimentation continue que l'on fait varier lentement de façon à reproduire cette modulation. Cette façon de faire, si elle est compatible avec tous les types de convertisseurs à découpage, a pour inconvénient de nécessiter l'utilisation d'un dispositif amont de modulation, ou modulateur, qui est mis en série et qui agit directement sur les signaux délivrant la puissance, avec un rendement propre inférieur à 100%, ce qui entraîne des pertes supplémentaires généralement comprises entre 10% et 20%.

L'invention vise à remédier à cet inconvénient. Elle se rapporte à cet effet à une installation de génération et d'émission, en particulier vers une antenne acoustique sous-marine, d'une onde de puissance modulée et régulée en amplitude, cette installation utilisant une conversion DC/AC (continu/alternatif) à découpage vertical (c'est à dire à Modulation de Largeur d'Impulsions ou M.L.I.) et comportant :

. une mémoire numérique contenant, sous forme numérique, toutes les séquences de découpage optimisées qui correspondent aux Q niveaux d'amplitude possibles pour l'onde émise, en fonction de la modulation d'amplitude souhaitée ;

. un dispositif d'adressage séquentiel de cette mémoire comprenant une table des références de modulation d'amplitude "@ Vréf" et un dispositif logique apte à comparer chaque référence

"@ Vréf" issue de cette table avec la valeur de crête "@ Vcrête" mesurée de la tension instantanée effectivement, et à déduire de cette comparaison, l'adresse de cette mémoire qui correspond à la valeur corrigée "@ Vréel" qu'il convient, à la période suivante de l'onde émise, d'extraire de la mémoire ;

. un émetteur de puissance auquel est appliqué cette onde extraite et débitant sur la charge ;

. un circuit de prélèvement, d'atténuation, et de détection crête, de la tension aux bornes de cette charge ; et

. un circuit d'acquisition de la valeur numérique "@ Vcrête" de cette tension de crête "Vcrête" ainsi détectée, ce circuit fournissant l'autre entrée dudit dispositif logique de comparaison.

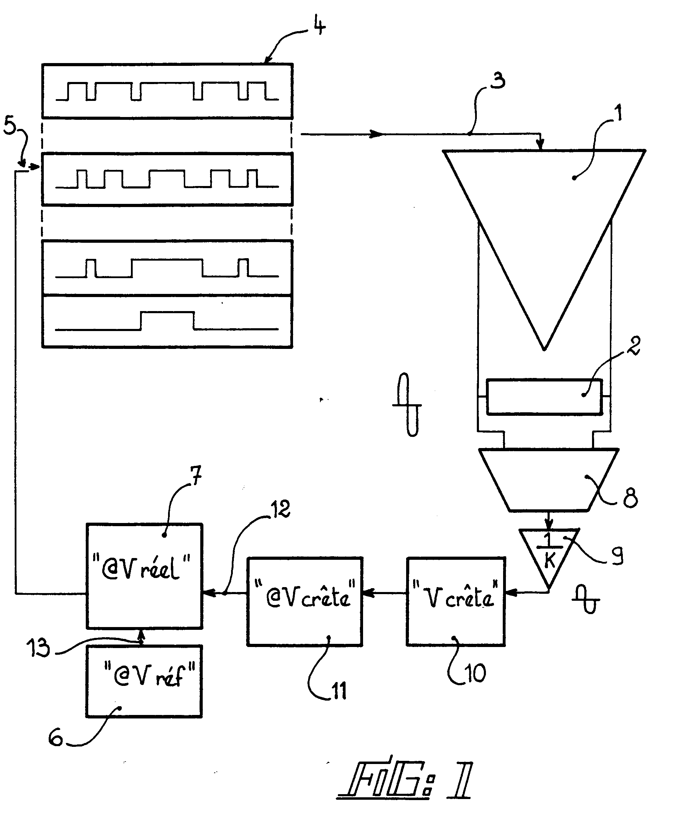

De toute façon, l'invention sera bien comprise et ses avantages et autres caractéristiques ressortiront, lors de la description suivante d'un exemple non limitatif de réalisation, en référence à la figure unique annexée qui est un schéma synoptique de cette installation.

En se référant à cette figure unique, cette installation comporte un émetteur de puissance 1 qui débite sur la charge 2 l'onde modulée en fréquence, et qui reçoit sur son entrée 3 la séquence de trains numériques qui est extraite d'une mémoire numérique 4 contenant les Q séquences de découpage optimisées qui correspondent aux Q niveaux d'amplitude possibles pour la modulation souhaitée.

Il convient à ce propos de rappeler que les composantes harmoniques d'une onde du type M.L.I. sont uniquement fonction des instants, ou angles ($\alpha_i$), de transition d'états, c'est à dire :

− entre +E et -E pour une modulation du type (+E, -E),

− entre +E, 0 et -E pour une modulation du type (+E, 0, -E).

Donc, connaissant l'expression analytique des composantes harmoniques "$H_n$",

$$H_n = \frac{4\ E}{n\ \Pi} \sum_i (-1)^i \cos(n\alpha_i)$$

il suffit de résoudre le système d'équations non linéaires, en fonction des angles "$\alpha_i$", pour le critère sur les niveaux choisis. Ce système comprend autant d'équations que d'inconnues. Sa dimension est égale au nombre d'impulsions "MLI" que l'on considère par demi-période. Ce système s'écrit :

$$S_1 = \begin{cases} H_1(\alpha_1, \alpha_2, \ldots \alpha_n) = A_1 \\ H_3(\alpha_1, \alpha_2, \ldots \alpha_n) = \xi_3 \\ \quad . \\ \quad . \\ H_n(\alpha_1, \alpha_2, \ldots \alpha_n) = \xi_n \end{cases}$$

Après avoir résolu les systèmes $S_1$, on obtient un vecteur solution de n composantes. Il s'agit des angles "$\alpha_i$" correspondant aux conditions choisies, c'est à dire, $A_1$, pour l'amplitude du fondamental et $\xi_i$ (précision souhaitée) pour $H_3$, $H_5$,...$H_n$), $\xi_i$ pouvant bien entendu être nul.

Si, à présent, on souhaite modifier l'amplitude de $H_1$, il suffit de résoudre un système S2, équivalent au premier, avec une valeur "$A_2$" pour le fondamental. Et enfin, pour obtenir une variation importante du fondamental, comprise entre "$A_{min}$" et "$A_{max}$", il faut choisir le nombre de niveaux intermédiaires "Q" et résoudre le système d'équations $S_i$ pour chaque niveau Ai.

En conséquence, toutes les Q "séquences" de découpage sont mémorisées sous la forme d'une suite de "O" et de "1" dans la mémoire 4 puis restituées période après période pour obtenir la forme de modulation d'amplitude choisie.

Il convient de remarquer que le critère d'optimisation des angles de transitions tient compte de la symétrie quart d'onde des séquences et donc que le passage d'une séquence de découpage à une autre s'effectue à la fin de chaque période en cours.

En revenant à la figure unique, la mémoire 4 est associée à un dispositif d'adressage séquentiel qui comporte :
- un pointeur d'adresses 5 ;
- une table des références 6 qui contient toutes les valeurs théoriques successives numérisées "@ Vréf" des niveaux de la mémoire 4 qui correspondent à la modulation souhaitée ; et
- un organe logique de calcul 7 qui compare chaque valeur de référence "@ Vréf" issue de cette table 6 avec la valeur de crête numérisée "@ Vcrête" mesurée de la tension instantanée effectivement émise aux bornes de la charge 2, et qui déduit de cette comparaison l'adresse en 5 qui correspond à la valeur d'amplitude corrigée "@ Vréel" qu'il convient d'extraire à la période H.F. suivante de l'onde émise.

La valeur réelle dont on a besoin pour effectuer cette régulation d'enveloppe est prélevée aux bornes de la charge 2 par un circuit de mesure (ou "de détection") 8, suivi d'un atténuateur 9 de rapport 1/K.

L'onde atténuée en sortie de 9 est appliquée à un circuit 10 de détection de sa valeur de crête "Vcrête", dont la valeur analogique d'acquisition est numérisée en sa valeur "@ Vcrête" par le circuit d'acquisition et de conversion 11.

La sortie 12 de ce circuit d'acquisition 11 constitue la seconde entrée de comparaison du circuit logique 7 (la première entrée étant la sortie 13 de la table de références 6).

La fonction "détection-atténuation" qui est réalisée par les circuits 8 et 9, a pour objet de prélever la tension sinusoïdale soumise à la charge 2 tout en adaptant les niveaux observés pour pouvoir être traitée par la fonction suivante. cette opération nécessite très souvent un isolement galvanique. Elle peut par exemple être réalisée :
- soit par pont diviseur seul (ici, pas d'isolement),
- soit par pont diviseur et transformateur,
- soit par transformateur seul,
- soit par pont diviseur et amplificateur d'isolement, ou par toute autre combinaison comprenant les éléments déjà cités.

La fonction "détection crête" qui est réalisée par le circuit 10 apporte la toute première information concernant la quantité à contrôler en donnant une image de l'amplitude de la modulation. Elle peut par exemple être réalisée :
- soit par capacité bloquée seule (détection sur une demi-alternance),
- soit par redressement sans seuil et une capacité bloquée (détection sur les deux alternances),
- soit par échantillonneur bloqueur synchronisé (détection sur une demi-alternance),
- soit par redressement sans seuil et échantillonneur bloqueur synchronisé (détection sur les deux alternances),
ou par toute autre combinaison comprenant les éléments déjà cités.

Le circuit 11 réalise la conversion analogique-numérique de la quantité Vcrête. Cette conversion permet de traiter la correction en numérique et d'adresser directement la séquence de découpage, mise en mémoire, correspondante.

L'organe logique 7, récupère les données de fonctionnement, compare la valeur convertie "@ Vcrête", image de l'amplitude de modulation en sortie, à une valeur de référence "@ Vréf" pour en donner une valeur corrigée "@ Vcorrigée = @ Vréf - @ Vcrête". Cette valeur corrigée s'ajoute, ou se retranche selon le cas, à la valeur réelle de fonctionnement et effectue ainsi la correction par application de la formule :

$@Vréel_{k+1} = @Vréel_k + @Vréf - @Vcrête$

Comme il va de soi, l'invention n'est pas limitée à l'exemple de réalisation qui vient d'être décrit : elle peut être mise en oeuvre sous de nombreuses autres formes équivalentes, voire même plus sophistiquées.

**Revendications**

1. Installation de génération et d'émission, en particulier vers une antenne acoustique sous-marine, d'une onde de puissance modulée et régulée en amplitude, cette installation utilisant une conversion DC/AC à découpage vertical, ou M.L.I., caractérisée en ce qu'elle comporte :

   – une mémoire numérique (4) contenant toutes les séquences de découpage optimisées qui correspondent aux Q niveaux d'amplitude possibles pour l'onde émise, en fonction de la modulation d'amplitude souhaitée ;

   – un dispositif (5, 6, 7) d'adressage séquentiel de cette mémoire (4) comprenant une table (6) des références de modulation d'amplitude (@ Vréf) et un dispositif logique (7) apte à comparer chaque référence (@ Vréf) issue de cette table avec la valeur de crête (@ Vcrête) mesurée de la tension instantanée effectivement émise, et à déduire de cette comparaison l'adresse de cette mémoire qui correspond à la valeur corrigée qu'il convient, à la période suivante de l'onde émise, d'extraire de la mémoire (4) ;

   – un émetteur de puissance (1) auquel est appliqué cette onde extraite (3) et débitant sur la charge (2) ;

   – un circuit (8, 9, 10) de prélèvement, d'atténuation, et de détection-crête de la tension aux bornes de cette charge (2) ; et

   – un circuit (11) d'acquisition de la valeur numérique (@ Vcrête) de cette tension de crête (Vcrête) ainsi détectée, ce circuit fournissant l'autre entrée de comparaison (12) appliquée audit circuit logique (7).

**European Patent Office**

**EUROPEAN SEARCH REPORT**

Application Number

EP 91 40 2199

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 032 335 (THOMSON-CSF)<br>* abstract *<br>* page 4, line 8 - page 7, line 20; figure 2 *<br>--- | 1 | G01S7/52<br>H02M7/529 |
| Y | GB-A-2 025 175 (SIEMENS)<br>* page 4, line 12 - line 113 *<br>* page 6, line 84 - line 128; figures 1,2,5 *<br>--- | 1 | |
| A | US-A-4 099 109 (ABBONDANTI)<br>* abstract *<br>* column 3, line 58 - column 5, line 27 *<br>* column 15, line 23 - column 16, line 33; figure 13 *<br>--- | 1 | |
| A | US-A-4 317 165 (SULLIVAN)<br>* column 1, line 62 - column 2, line 37; figure 1 *<br>----- | 1 | |
| | | | **TECHNICAL FIELDS SEARCHED (Int. Cl.5)**<br><br>G01S<br>H02M<br>H03K |

The present search report has been drawn up for all claims

| Place of search | Date of completion of the search | Examiner |
|---|---|---|
| THE HAGUE | 29 NOVEMBER 1991 | AUGARDE E.P.G.T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)